# EUROPÄISCHE PATENTSCHRIFT

(11) **EP 1 543 471 B1**
(45) Veröffentlichungstag und Bekanntmachung des Hinweises auf die Patenterteilung: **03.05.2006**
(21) Anmeldenummer: 03757868.9
(22) Anmeldetag: 18.09.2003
(51) Int. Cl.: G06K 9/20

(54) **ERFASSEN UND GREIFEN VON GEGENST NDEN**
DETECTION AND GRIPPING OF OBJECTS
DETECTION ET PRISE D'OBJETS

(30) Priorität: 23.09.2002 DE 10244275; 21.08.2003 DE 10338323
(43) Veröffentlichungstag der Anmeldung: 22.06.2005
(73) Patentinhaber: Tropf, Hermann, Dr.-Ing., 68789 St.Leon-Rot (DE)
(72) Erfinder: Tropf, Hermann, Dr.-Ing., 68789 St.Leon-Rot (DE)
(74) Vertreter: Schneider, Günther Martin
(86) Internationale Anmeldenummer: PCT/EP2003/010411
(87) Internationale Veröffentlichungsnummer: WO 2004/029864

(56) Entgegenhaltungen:
- EP-A- 0 226 938
- SHIRAI Y ET AL: "EXTRACTION OF THE LINE DRAWING OF 3-DIMENSIONAL OBJECTS BY SEQUENTIAL ILLUMINATION FROM SEVERAL DIRECTIONS" PATTERN RECOGNITION, PERGAMON PRESS INC. ELMSFORD, N.Y, US, Bd. 4, Nr. 4, 1972, Seiten 343-351, XP001108917 ISSN: 0031-3203
- PATENT ABSTRACTS OF JAPAN vol. 008, no. 068 (P-264), 30. März 1984 (1984-03-30) & JP 58 213382 A (FUJITSU KK), 12. Dezember 1983 (1983-12-12)

## Beschreibung

Die Erfindung betrifft das Erkennen, Greifen oder Bearbeiten von ungeordneten oder schlecht geordneten oder ungenau positionierten Teilen, insbesondere Schüttgut-Teilen, vorzugsweise mittels Roboter oder sonstigen Handhabungsvorrichtungen.

Für dieses Thema gibt es eine ausführliche, meist akademische Literatur, die sich hauptsächlich mit den Bildverarbeitungsmethoden auseinandersetzt. Die eingesetzten Bildauswerteverfahren sind meist konturorientierte und modellbasierte Verfahren. Konturbasierte Verfahren liefern gegenüber flächenbasierten Verfahren i.a. stabilere und genauere Ergebnisse und sind für teilweise verdeckte Werkstücke in der Regel erforderlich. Bei modellbasierten Verfahren wird vorab die Werkstückgeometrie (oder Teile davon) eingegeben, z.B. aus CAD-Daten.

Ein entscheidendes Problem bei der praktischen Realisierung eines solchen Systems besteht darin, dass sich bei den bisher bekannten Kamera- und (ggf.) Beleuchtungsanordnungen nur ein Teil der Werkstückkonturen ausreichend zuverlässig darstellt.

Nach DE 3545960 wird versucht, unter Verwendung einer einzelnen Kamera, mehrere Bilder mit unterschiedlichen Beleuchtungen aufzunehmen; dadurch wird zwar die Wahrscheinlichkeit erhöht, dass sich eine Kante in einer dieser Bildaufnahmen darstellt, sichergestellt ist dies jedoch nicht, beispielsweise dann nicht, wenn an der Kante der Hintergrund die gleichen Oberflächeneigenschaften hat wie das obere Werkstück und die gleiche räumliche Orientierung.

Mit bekannten Beleuchtungsanordnungen ergeben sich nur in Sonderfällen zuverlässige Bildmerkmale, beispielsweise bei glänzenden zylindrischen Teilen, bei denen sich eine zuverlässige, hell reflektierende Mantellinie ergibt. Trotz des großen praktischen Bedarfs werden daher bisher kaum Roboter zum dreidimensionalen Greifen von Schüttgut eingesetzt; eine praxistaugliche allgemeingültige Lösung der Aufgabe ist bisher daran gescheitert, dass sich unter ungünstigen Bedingungen bestimmte Konturen schlecht oder gar nicht darstellen. Auswege sind mit großem mechanischem Aufwand verbunden, beispielsweise werden die Teile auf einem transparenten und von unten durchleuchteten Förderband ausgebreitet und, falls sie übereinander liegen, mit einer zusätzlichen steuerbaren Einrichtung von unten angestoßen in der Hoffnung, dass sie danach getrennt liegen und sich damit mit vollständigen Konturen darstellen; dann erst werden sie über ein Bildverarbeitungssystem lokalisiert und durch einen Roboter gegriffen.

Welche Konturen sich zuverlässig darstellen und welche nicht, hängt bei bekannten Kamera- und Beleuchtungsanordnungen von der zufälligen räumlichen Orientierung der Werkstücke ab. Damit wird die Realisierung einer zuverlässigen Bildauswertung äußerst schwierig, insbesondere wenn die Aufgabe eine echte dreidimensionale Lagebestimmung der Werkstücke erfordert (i.a. drei Positionsparameter und drei Orientierungsparameter).

Ein Ausweg ist der Übergang von konturorientierter Verarbeitung zu flächiger 3D-Auswertung mittels strukturierten Lichts. Diese Methode ist jedoch technisch äußerst aufwändig und erfordert "exotische" Beleuchtungskomponenten.

DE-A 41 42 614 bezieht sich auf eine Vorrichtung und ein Verfahren zum Erkennen von Objekten, wie Unregelmäßigkeiten, Schlagzahlen und -buchstaben auf Oberflächen, beispielsweise von Werkstücken. Vorgeschlagen wird dort, dass mindestens zwei Kameras unter einem endlichen Winkel zueinander ausgerichtet sind und im Wesentlichen senkrecht auf eine von einer ihnen zugeordneten Lichtquelle bewirkten Schlagschattengrenze gerichtet sind.

EP-A 0 226 938 bezieht sich auf ein Verfahren und eine Anordnung zum Erkennen von Teilen, die in beliebiger Orientierung angeordnet sind, wobei das Verfahren in der Aufnahme, im Speichern und der Weiterverarbeitung von digitalisierten Bildern besteht. Dabei werden eine Vielzahl von Bildern der zu handhabenden Teile in rascher Folge oder gleichzeitig und mit unterschiedlichen Lichtverhältnissen aufgenommen, die zwischen Kanten- und Konturenkontrasten und Flächenmerkmalen unterscheiden, wobei die so gewonnen Bilder dahingehend verarbeitet werden, dass die Kanten- und Konturenkontraste verstärkt und die Flächenmerkmale eliminiert werden.

US-A-4 873 651 betrifft ein Verfahren und eine Vorrichtung zum Rekonstruieren der Oberfläche, d.h. der dritten Dimension, eines dreidimensionalen Objekts aus zweidimensionaler Information, umfassend das Projizieren von Strahlungsenergie von einer im Wesentlichen parallelen Strahlungsquelle auf das Objekt unter einer Anzahl verschiedener Winkel bezogen auf eine Referenzoberfläche, bezüglich welcher das Objekt platziert ist. Die Längen und Stellen von Schatten, welche durch das Objekt geworfen werden, werden gemessen als eine Funktion des Winkels der Lichtstrahlen. Die Stellen der Oberfläche des Objekts bezogen auf die Referenzoberfläche wird bestimmt aus den Schattenlängen und Stellen von den Winkeln, unter welchen die jeweiligen Schattenlängen erzeugt werden.

Aufgabe der Erfindung ist die zuverlässige Darstellung aller oder möglichst vieler unverdeckten Konturen eines Werkstücks, unabhängig von der zufälligen räumlichen Orientierung des Werkstücks, unter Verwendung einfacher Standard-Beleuchtungskomponenten, insbesondere ohne strukturiertes Licht.

Eine weitere Aufgabe ist es, ein Lernen durch einfaches Vorzeigen im Einrichtbetrieb und Datenvergleich im Automatikbetrieb zu ermöglichen, ohne vorab im Einrichtbetrieb Modelldaten eingeben zu müssen.

Die Aufgaben werden mit einem Verfahren nach Anspruch 1 oder 12 und mit einer Vorrichtung nach Anspruch 18 gelöst. Vorteilhafte Ausführungsformen werden in den abhängigen Ansprüchen bestimmt.

Demnach wird ein Verfahren bereitgestellt zum Aufbau einer Datensammlung unter Zuhilfenahme von zumindest einer Bild gebenden Einrichtung und zumindest einer Beleuchtungsvorrichtung, wobei ein Gegenstand aus zumindest drei unterschiedlichen Aufnahmerichtungen aufgenommen wird und aus zumindest drei unterschiedlichen Beleuchtungsrichtungen, jeweils im Auflicht, beleuchtet wird, wobei jeweils eine Aufnahmerichtung einer Beleuchtungsrichtung im Wesentlichen entgegengesetzt ist, so dass aus jeder der drei Aufnahmerichtungen jeweils mindestens eine Kontur des Gegenstandes mit einer Lichtseite und einer Schattenseite des Gegenstandes erscheint, und im Wesentlichen der gesamte Gegenstand aus den zumindest drei Aufnahmerichtungen durch die zumindest eine Bild gebende Einrichtung aufgenommen wird, wobei die Aufnahmerichtungen und die Beleuchtungsrichtungen einerseits und der Gegenstand andererseits relativ zueinander mit mehreren Freiheitsgraden definiert bewegbar sind, und wobei die Bildaufnahmen und/oder davon ableitende Daten in der Datensammlung gespeichert werden.

In einer Ausgestaltung der Erfindung können Bildaufnahmen in verschiedenen Relativlagen von Aufnahmevorrichtungen und Beleuchtungsvorrichtungen einerseits und des Gegenstandes andererseits gemacht werden.

In einer weiteren Ausgestaltung der Erfindung können Veränderungen der Relativlagen zwischen den Bildaufnahmen festgehalten und den Bildaufnahmen zugeordnet werden, wobei mit den Bildaufnahmen oder mit davon abgeleiteten Daten zugeordnete Lageangaben in der Datensammlung gespeichert werden können.

In einer weiteren Ausgestaltung der Erfindung können mehrere Bildaufnahmen gemacht werden, zwischen denen die Lage von Aufnahmevorrichtungen und Beleuchtungsvorrichtungen gemeinsam verändert werden.

In einer weiteren Ausgestaltung der Erfindung können die Lage der Aufnahmevorrichtungen und Beleuchtungsvorrichtungen mittels einer Roboterstellung bestimmt werden.

In einer weiteren Ausgestaltung der Erfindung können mehrere Bildaufnahmen gemacht werden, zwischen denen die Lage des Gegenstandes verändert wird.

In einer weiteren Ausgestaltung der Erfindung kann die Lage des Gegenstandes mittels eines Roboters verändert werden.

Eine weitere Ausgestaltung der Erfindung stellt eine Datensammlung mit Bildaufnahmen und/oder daraus abgeleiteten Daten bereit sowie ein Computer-lesbares Speichermedium mit Daten einer Datensammlung.

In noch einer weiteren Ausgestaltung der Erfindung wird ein Verfahren bereitgestellt zum Greifen eines Gegenstandes aus einer Mehrzahl von Gegenständen unter Zuhilfenahme von zumindest einer Bild gebenden Einrichtung und zumindest einer Beleuchtungsvorrichtung, wobei der Gegenstand aus zumindest drei unterschiedlichen Aufnahmerichtungen aufgenommen wird und aus zumindest drei unterschiedlichen Beleuchtungsrichtungen, jeweils im Auflicht, beleuchtet wird, wobei jeweils eine Aufnahmerichtung einer Beleuchtungsrichtung im Wesentlichen entgegengesetzt ist, so dass aus jeder der drei Aufnahmerichtungen jeweils mindestens eine Kontur des Gegenstandes mit einer Lichtseite und einer Schattenseite des Gegenstandes erscheint, und im Wesentlichen der gesamte Gegenstand aus den zumindest drei Aufnahmerichtungen durch die zumindest einer Bild gebenden Einrichtung aufgenommen wird.

In einer weiteren Ausgestaltung der Erfindung können Referenzbildaufnahmen und/oder davon abgeleitete Daten, die in einer Datensammlung gemäß Anspruch 10 enthalten sind, verwendet werden.

In einer weiteren Ausgestaltung der Erfindung können Bildaufnahmen des Gegenstandes und Bildaufnahmen beziehungsweise abgeleitete Daten in der Datensammlung verglichen werden.

In einer weiteren Ausgestaltung der Erfindung können mit einer im Wesentlichen sternförmigen Anordnung der Beleuchtungs- und Aufnahmevorrichtungen, wobei, aus einer Richtung gesehen, die Beleuchtungsrichtungen paarweise einen Winkel zwischen 75 Grad und 145 Grad, vorzugsweise 120 Grad, aufweisen und aus einer Richtung gesehen, die Aufnahmerichtungen paarweise einen Winkel zwischen 75 Grad und 145 Grad, vorzugsweise 120 Grad, aufweisen können.

In einer weiteren Ausgestaltung der Erfindung kann die Bildaufnahme aus den Aufnahmerichtungen jeweils im Wesentlichen über Licht aus der im Wesentlichen entgegen gesetzten Beleuchtungsrichtung durchgeführt werden, vorzugsweise durch Schalten und/oder durch Polarisations- und/oder spektrales Filtern und/oder durch Verwendung zumindest einer farbfähigen Aufnahmevorrichtung.

Eine weitere Ausgestaltung der Erfindung stellt ein Computer-lesbares Speichermedium mit einem Verfahren zum Aufbau einer Datensammlung bereit.

Noch eine weitere Ausgestaltung der Erfindung stellt eine Vorrichtung zum Greifen eines Gegenstandes aus einer Mehrzahl von Gegenständen bereit, mit zumindest drei Aufnahmevorrichtungen und zumindest drei Auflicht-Beleuchtungsvorrichtungen, wobei jeweils eine Aufnahmevorrichtung und eine Beleuchtungsvorrichtung einander im Wesentlichen gegenüberliegen, so dass von jeder der drei Aufnahmevorrichtungen jeweils mindestens eine Kontur des Gegenstandes mit einer Lichtseite und einer Schattenseite des Gegenstandes abbildbar ist, und im Wesentlichen der gesamte Gegenstand von den zumindest drei Aufnahmevorrichtungen abbildbar ist.

Noch eine weitere Ausgestaltung der Erfindung stellt eine Vorrichtung bereit, die ausgestaltet ist zur Verwendung von Referenzbildaufnahmen und/oder davon abgeleitete Daten, die in einer Datensammlung gemäß Anspruch 10 enthalten sind.

In einer weiteren Ausgestaltung der Erfindung kann die Vorrichtung weiter aufweisen eine im Wesentlichen sternförmige Anordnung der Beleuchtungsvorrichtungen und Aufnahmevorrichtungen, wobei, aus einer Richtung gesehen, die Beleuchtungsrichtungen paarweise einen Winkel zwischen 75 Grad und 145 Grad, vorzugsweise 120 Grad, aufweisen und aus einer Richtung gesehen, die Aufnahmerichtungen paarweise einen Winkel aufweisen zwischen 75 Grad und 145 Grad, vorzugsweise 120 Grad, aufweisen.

In einer weiteren Ausgestaltung der Erfindung kann die Vorrichtung, die ausgestaltet ist zur Aufnahme von Bildern jeweils im Wesentlichen über Licht aus der im Wesentlichen entgegen gesetzten Beleuchtungsrichtung, vorzugsweise durch ein Schaltmittel und/oder durch Polarisations- und/oder Spektral-Filter und/oder durch zumindest eine farbfähigen Aufnahmevorrichtung.

Die Erfindung wird anhand der beigefügten Zeichnung näher beschrieben. Es zeigen:
- Fig. 1: eine Seitenansicht der Kamera- und Beleuchtungsanordnung gemäß der vorliegenden Erfindung;
- Fig. 2: die Anordnung aus Fig. 1 senkrecht von unten gesehen;
- Fig. 3: in einem Ausschnitt eine Kamera und die dazugehörige Beleuchtung gemäß der vorliegenden Erfindung; und
- Fig. 4: eine Werkstückszene und drei Kameras sowie schematische Darstellungen der von den Kameras aufgenommenen Bilder.

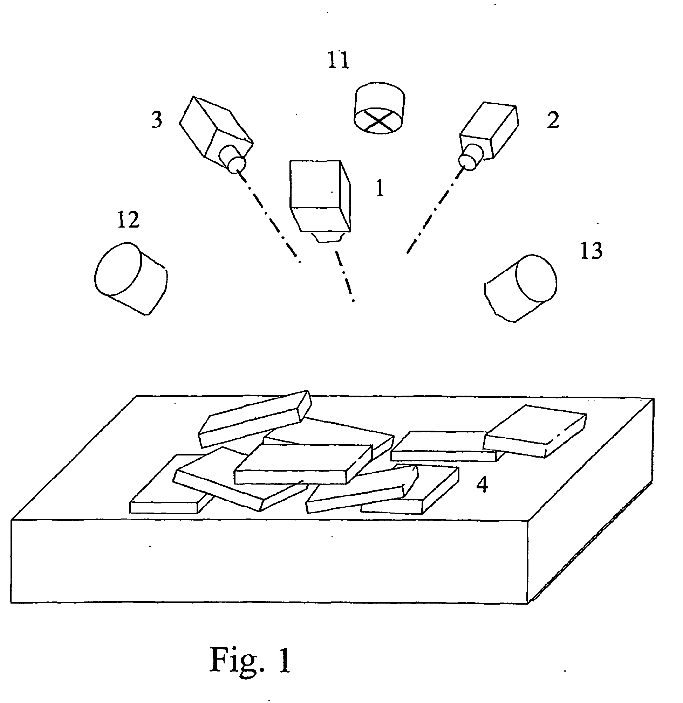

Fig. 1 zeigt eine Seitenansicht der Kamera- und Beleuchtungsanordnung, mit den Kameras 1, 2, 3, und den ihnen zugeordneten, (symbolisch gezeichneten) Beleuchtungen 11 (für Kamera 1), 12 (für Kamera 2) und 13 (für Kamera 3), sowie dem Schüttgut mit den Werkstücken 4. Die gezeichnete feste Unterlage kann natürlich beispielsweise durch ein Transportband oder einen Behälter ersetzt werden.

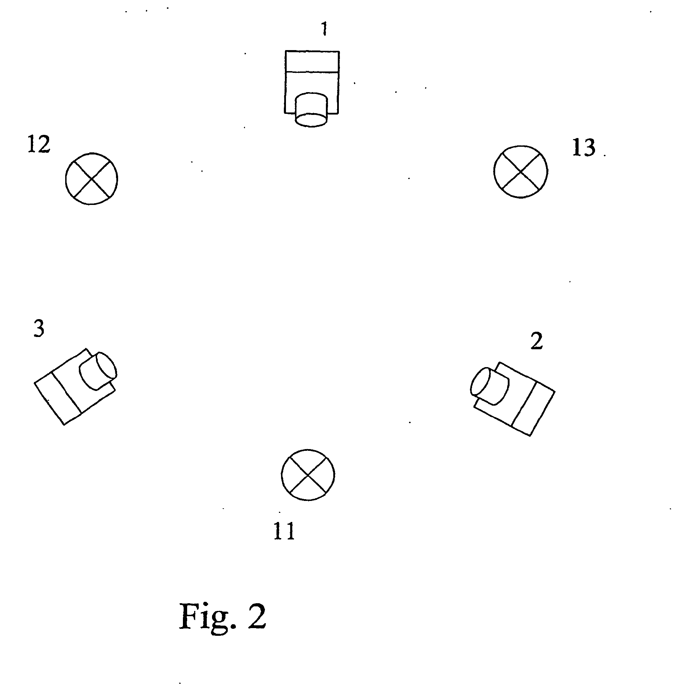

Fig. 2 zeigt die Anordnung senkrecht von unten gesehen.

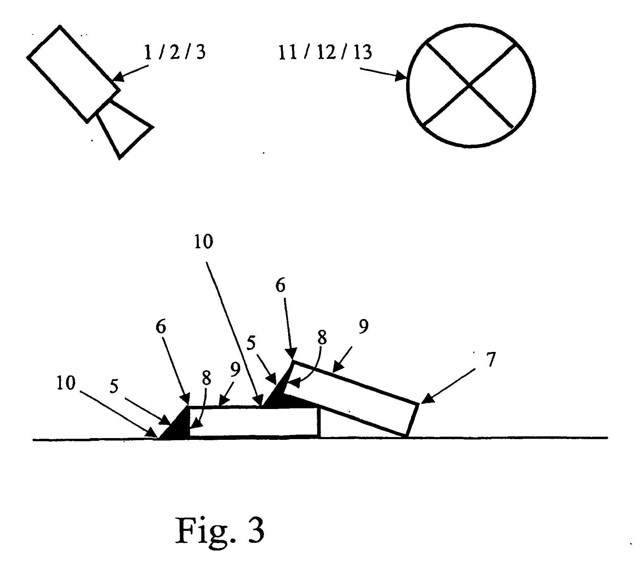

Fig. 3 zeigt ausschnittsweise eine Kamera und die dazugehörige Beleuchtung und den damit erzeugten Schlagschatten 5 an der Werkstückkante 6. Die gegenüberliegende Werkstückkante 7 ist aus Sicht der Kamera 1 nur unter günstigen Umständen erkennbar, zum Beispiel bei einer dunklen Unterlage. Die Kanten 6 sind aus Kamera 1 dagegen zuverlässig sichtbar, unabhängig von der Materialhelligkeit und der dreidimensionalen Lage des Werkstücks, bei geeignet angepasster Größe der Beleuchtung gilt dies auch bei glänzenden Werkstückoberflächen: Die Kanten 6 erzeugen im Bild eine Kontur. Beide Werkstückseiten der Kontur sind von der Kamera aus einsehbar, nämlich einerseits die von der gegenüberliegenden Beleuchtung beleuchtete Teilefläche 9 und andererseits die von der gegenüberliegenden Beleuchtung unbeleuchtete Teilefläche 8. Die Werkstückoberfläche 9 reflektiert in jedem Falle hell, da sie sich zumindest näherungsweise im Glanzwinkel befindet (bei matten Oberflächen genügt eine kleine Lichtquelle, um dies zu erreichen, bei glänzenden Oberflächen benötigt man eine größere Lichtquelle). In Richtung Kamera befindet sich ein Schlagschatten 5, in den die Kamera hineinblickt, der sichtbar ist (ein ggf. auf der gegenüberliegenden Seite des Werkstücks liegender Schlagschatten wäre z.B. nicht sichtbar): Darin erscheint die Fläche 8 immer dunkler als die Fläche 9, unabhängig von der Beschaffenheit des Werkstückmaterials. Damit bildet sich die Werkstückkontur immer zuverlässig im Bild der Kamera ab, auch unabhängig vom Hintergrund, da die Kontur durch zwei Seiten desselben Werkstücks berandet ist.

Das Ende des Schlagschattens (Schattenkante 10) bildet allerdings ebenfalls eine Kontur. Diese hat jedoch im Bild die umgekehrte Polarität: im Kamerabild wechselt an der Werkstückkontur, von oben nach unten gesehen, die Helligkeit von hell nach dunkel, an der Schattenkante von dunkel nach hell. Damit sind bildauswertetechnisch Werkstückkonturen von Schattenkonturen sehr einfach voneinander zu unterscheiden (ein ggf. auftretender Schlagschatten an Werkstückkante 7 hätte zwar invertierte Polarität, doch ist dieser von der Kamera aus nicht zu sehen).

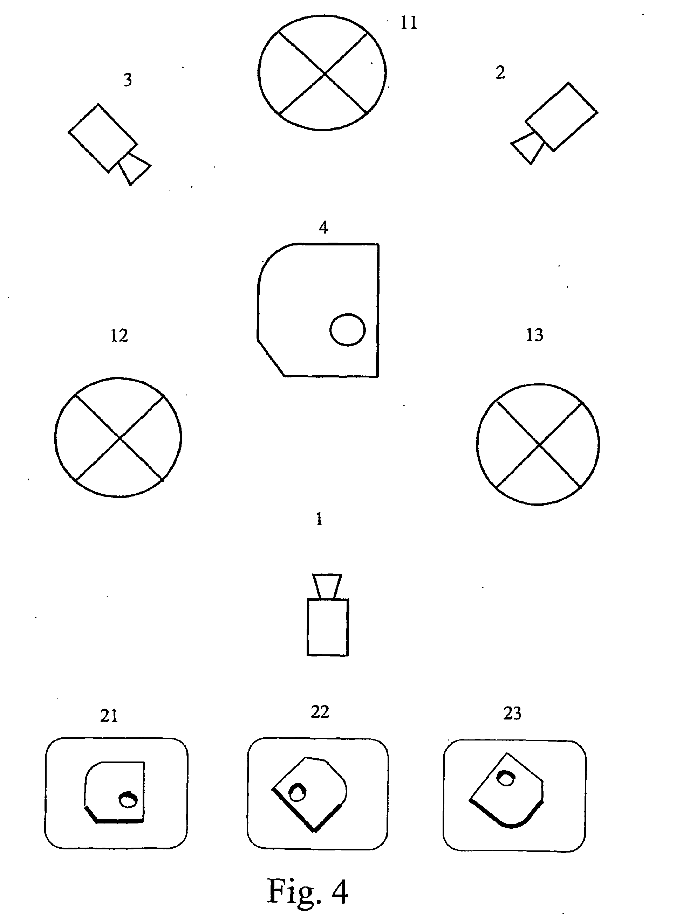

Fig. 4 zeigt, von oben gesehen, eine Werkstückszene und drei Kameras, gleichzeitig die drei getrennten Bilder 21 (für Kamera 1), 22 (für Kamera 2), 23 (für Kamera 3), mit den Schlagschatten als dicke Kante eingezeichnet.

Ein besonderer Vorteil der Erfindung besteht darin, dass mit der Anordnung mit mindestens drei Kameras und entsprechend eingerichteten Bildfeldern jeder Konturabschnitt in mindestens einer Kamera sich in der in Fig. 3 dargestellten Situation (Kante 6) befindet und für diese Kamera die Kontur zuverlässig im Bild erscheint.

Ein nachgeschaltetes Bildauswerteverfahren besitzt nun - von ggf. vorhandenen grundsätzlichen geometrischen Mehrdeutigkeiten abgesehen - alle Informationen, die erforderlich sind, um eine Typerkennung oder Lageerkennung zu realisieren. Alle unverdeckten Konturen der Werkstückoberseite sind in mindestens einer Kamera zuverlässig dargestellt.

Die sehr vorteilhaften Eigenschaften der Konturbildung bleiben auch prinzipiell beibehalten, wenn die in Anspruch 4 oder 5 geschilderte Trennung der Kanäle nicht durchgeführt wird, wenn sich also kein voll ausgeprägter Schlagschatten bildet, sondern nur ein Halbschatten. Dies ist beispielsweise der Fall, wenn die drei den Kameras gegenüberliegenden Beleuchtungen durch ein einzelnes Ringlicht gebildet werden und keine weiteren Maßnahmen zur Kanaltrennung vorgenommen werden. Der dann sich ausbildende Halbschatten ist zwar nicht so signifikant wie ein Vollschatten, wie er bei Kanaltrennung erreicht wird, doch ist dies in vielen Fällen ausreichend.

Bei der 3D-Auswertung besteht ein besonderer Vorteil der beschriebenen Anordnung mit drei schräg zueinander stehenden Kameras darin, dass sich, bei kleinen Drehungen des Werkstücks im Raum, mindestens ein Konturbild signifikant verändert (i.a. verändern sich mehrere Konturbilder gleichzeitig), dergestalt, dass eine 3D-Lagebestimmung auch mit guter numerischer Genauigkeit erfolgen kann und ein einfaches Einlernen nur durch Vorzeigen von Werkstücken in verschiedenen Lagen ausreicht, ohne auf Modellinformation zurückgreifen zu müssen.

Besonders vorteilhaft braucht für eine 3D-Lageerkennung die Geometrie der Werkstückkanten nicht bekannt zu sein, wenn die Erkennung durch einen Vergleich mit den im Einrichtbetrieb in definierten Relativlagen aufgenommen Bildern oder davon abgeleiteten Daten in einer Referenzdatensammlung bzw. einer Referenzdatenbank realisiert wird, denn bildauswertetechnisch sind Werkstückkonturen von den umgebungsabhängigen Schattenkonturen sehr einfach voneinander zu unterscheiden (s.o.), ohne Vorwissen über die Werkstückgeometrie einsetzen zu müssen. Nach den bisher bekannten Ansätzen kann eine sichere Unterscheidung von Werkstück- und Schattenkanten erst im Rahmen des (i.a. modellbasierten) Bildanalyse-Verfahrens geschehen; hier geschieht diese Unterscheidung vorab und ohne Vorkenntnisse, was wiederum die nachgeschaltete Analyse selbst wesentlich vereinfacht und robuster macht.

Weitere Vorteile ergeben sich daraus, dass Kameras und Beleuchtungen gemeinsam gegen das Werkstück bewegt werden. Z.B. wird bei Befestigung von Kamera und Beleuchtung am Roboter im Einrichtbetrieb genau die gleiche relative Bildaufnahme- und Beleuchtungssituation simuliert wie später bei feststehendem Roboter und lageverändertem Teil. Unvorhergesehene Effekte wie z.B. Glanzlichter und Schattenbildungen treten damit beim Einlernen und beim Erkennen in genau der gleichen Weise auf, was wiederum das Einlernen durch reines Vorzeigen und Vergleichen (s.o.) erst praxisgerecht ermöglicht. Diese vorteilhafte Situation ist nicht gegeben, wenn Kameras und Beleuchtungen getrennt bewegt werden. Einfaches Lernen durch Vorzeigen und Erkennen durch Vergleichen mit dem Vorgezeigten, ohne Modellinformation, wird also erreicht im Zusammenwirken von
- zuverlässiger und eindeutiger Konturextraktion, alleine an Körperkanten, aufgrund der gewählten Kamera- und Beleuchtungsanordnung, und
- exakt reproduzierbarer Bildgewinnung durch gemeinsame Relativbewegung von Beleuchtung und Kameras gegen das Werkstück.
Letzteres ist übrigens auch erfüllt, wenn zusätzlich auch Kameras und Beleuchtungen gegeneinander beweglich sind, bei Bildaufnahme jedoch immer in gleicher oder zumindest näherungsweise gleicher Relativposition zueinander stehen.

Diese Eigenschaft führt auch dazu, dass eine mehrstufige Arbeitsweise einfacher und sicherer realisierbar wird, wobei der Roboter nach einer ersten Bildaufnahme in einer ersten Bewegung zunächst die Relativlage der Kameras zum Werkstück grob angepasst, und über eine nachgeschaltete Bildaufnahme und Bildauswertung eine Fein-Anpassung für das genaue Zugreifen realisiert wird. Natürlich kann das Ganze auch in mehr als zwei hintereinander geschalteten Stufen oder kontinuierlich realisiert werden.

Mehrkamera-Anordnungen mit Durchlicht anstelle von Auflicht erzeugen zwar ebenso zuverlässige Konturbilder, sind jedoch möglicherweise eher in einfachen Sonderfällen realisierbar. Dies gilt insbesondere für eine mehrdimensionale Lageerkennung; bei Durchlicht-Anordnungen sind keine beleuchteten Teileflächen zu sehen: für das Erkennen von ungeordnet übereinander liegenden Teilen, wie in Fig. 1 dargestellt, sind Durchlicht-Anordnungen praxisgerecht kaum realisierbar.

Die Figur 2 zeigt eine symmetrische Anordnung mit 3 Kameras. Die hier beschriebene Anordnung und das hier beschriebene Verfahren betreffen natürlich auch sinngemäß gleichartige Anordnungen, die von einer symmetrischen Geometrie abweichen. Kameras und Lampen müssen sich sowohl untereinander als auch gegeneinander nicht in gleicher Höhe befinden; die Teilung des 360-Grad-Umfangs braucht nicht in gleichen Winkeln zu erfolgen. Die Bildfelder brauchen grundsätzlich den 360-Grad-Umfang nicht vollständig abzudecken (Eindeutigkeit der Auswertung abhängig von der Werkstückgeometrie, z.B. bei Symmetrien oder umgekehrt bei sehr signifikanten lokalen Konturformen).

Die Figuren 1 und 2 zeigen Anordnungen mit von außen nach innen gerichteten Kameras. Kameras müssen nicht notwendigerweise von außen nach innen gerichtet sein z.B. bei Werkstücken mit inneren Kanten, wie z.B. Kreisringen.

Strukturierte Beleuchtung ist nicht erforderlich; natürlich kann grundsätzlich zusätzlich eine strukturierte Beleuchtung verwendet werden, um z.B. über nachgeschaltete Bildbearbeitunsgs-Softwarefilter eine bessere Trennung gegen Fremdlicht zu erreichen.

Die beschriebene Anordnung kann anstelle von drei Kameras natürlich auch mit sinngemäßen Spiegelanordnungen und weniger Kameras realisiert werden, auch unter Zuhilfenahme von starren oder flexiblen Bildleitern. Die gegenüber den Kameras befindlichen Beleuchtungen können, wie am Beispiel eines Ringlichts bereits erläutert, aus einer einzelnen Beleuchtung bestehen, oder aus einer zufällig gegenüber den Kameras vorhandenen Umgebungsbeleuchtung.

Die Erfindung bezieht sich neben Robotern natürlich ebenso auf beliebige steuerbare/regelbare Bewegungs- und Handhabungsvorrichtungen.

Ein weiteres Ausführungsbeispiel der Erfindung ist eine Anordnung zur Typ- und/oder Lageerkennung von ungeordneten oder schlecht geordneten oder einem oder mehreren ungenau positionierten Teilen, insbesondere Schüttgut-Teilen, die mittels Kameras im Auflicht aufgenommen werden, insbesondere mit dem Ziel des Greifens oder Bearbeitens, wobei
- mindestens drei Kameras mit unterschiedlicher Richtung auf die Teile bzw. ein Teil gerichtet sind,
- sich gegenüber jeder dieser Kameras eine Beleuchtung befindet,
- sich im Blickfeld jeder der drei Kameras potentiell mindestens eine Teilekontur eines gemeinsamen Teils befindet, deren beide Seiten von der Kamera aus einsehbar sind, nämlich einerseits eine von der jeweils gegenüberliegenden Beleuchtung beleuchtete Teilefläche und andererseits eine von der jeweils gegenüberliegenden Beleuchtung unbeleuchtete Teilefläche,
- die Beleuchtung und die drei Kameras einerseits und die Teile bzw. das Teil andererseits gegeneinander bewegt werden können.

Hierbei ist das Wort "potentiell" so zu verstehen, dass die Blickfelder der Kameras so eingerichtet sind, dass sich ein gemeinsames Werkstück mit je einer Kontur in den Blickfeldern befinden kann (ist dies nicht der Fall, so nimmt z.B. ein Roboter mit Kameras eine neue Ausgangsstellung ein, um ein Werkstück zu suchen; bei fest montierten Kameras fährt z.B. ein Transportband weiter, bis sich ein gemeinsames Werkstück in den Bildfeldern befindet).

In einer weiteren Ausführungsform der Erfindung können in einer Anordnung zur Lageerkennung Kameras und Beleuchtungen an einem Roboter montiert sein und gemeinsam gegen das Teil bzw. die Teile definiert bewegt werden.

In einer weiteren Ausführungsform davon kann in einer Anordnung zur Lageerkennung mit nicht an einem Roboter montierten Kameras und Beleuchtungen im Einrichtbetrieb ein Teil in verschiedenen definierten Lagen im Bildfeld der Kameras vorgezeigt, vorzugsweise abgelegt werden, besonders bevorzugt durch einen Roboter.

In einer weiteren Ausführungsform der Erfindung können in einer Anordnung Schalteinrichtungen und/oder durch Polarisationsfilter und/oder durch Farbfilter und/oder durch Farbkameras, die Beleuchtungs-Bildaufnahmekanäle getrennt werden.

In noch einer weiteren Ausführungsform der Erfindung wird ein Verfahren zum Greifen und/oder Bearbeiten von ungeordneten oder schlecht geordneten oder ungenau positionierten Teilen, insbesondere Schüttgut-Teilen, mit einer Anordnung zur Lageerkennung, wobei die Bildaufnahme der mindestens drei Kameras getrennt über die ihr jeweils gegenüberliegende Beleuchtung geschieht, vorzugsweise
- durch Schalten der Beleuchtungen und zeitlich getrennte Bildaufnahme,
- und/oder durch polarisiertes Licht, und Polarisationsfilter auf Kameraseite,
- und/oder durch Beleuchtung mit unterschiedlichen Spektralbereichen, und Selektion von Spektralbereichen auf Kameraseite, auf Kameraseite vorzugsweise durch Farbkameras oder spektrale Filter.

In noch einer weiteren Ausführungsform der Erfindung können in einem Verfahren zum Greifen und/oder Bearbeiten von ungeordneten oder schlecht geordneten oder ungenau positionierten Teilen, insbesondere Schüttgut-Teilen, mit einem Roboter und mit einer Anordnung zur Lageerkennung im Einrichtbetrieb, in dem Bilder von einem Musterteil in verschiedenen Relativlagen von Kameras und Beleuchtungen einerseits und Musterteil andererseits aufgenommen werden.

In noch einer weiteren Ausführungsform der Erfindung können in einem Verfahren zum Greifen mit einer Anordnung zur Lageerkennung im Einrichtbetrieb zum Einteachen der Teile die Kameras und Beleuchtungen gemeinsam bewegt werden.

In noch einer weiteren Ausführungsform der Erfindung kann in einem Verfahren zum Greifen mit einer Anordnung zur Lageerkennung im Einrichtbetrieb zum Einteachen der Teile ein Musterteil in verschiedenen definierten Lagen im Bildfeld der Kameras vorgezeigt, vorzugsweise abgelegt werden.

## Patentansprüche

1. Verfahren zum Aufbau einer Datensammlung unter Zuhilfenahme von zumindest einer bildgebenden Einrichtung und zumindest einer Beleuchtungsvorrichtung, wobei
a) ein Gegenstand aus zumindest drei unterschiedlichen Aufnahmerichtungen aufgenommen wird und
b) aus zumindest drei unterschiedlichen Beleuchtungsrichtungen, jeweils im Auflicht, beleuchtet wird,
wobei jeweils eine Aufnahmerichtung einer Beleuchtungsrichtung im Wesentlichen entgegengesetzt ist,
so dass aus jeder der drei Aufnahmerichtungen jeweils mindestens eine Kontur des Gegenstandes mit einer Lichtseite und einer Schattenseite des Gegenstandes erscheint und im Wesentlichen der gesamte Gegenstand aus den zumindest drei Aufnahmerichtungen durch die zumindest eine bildgebende Einrichtung aufgenommen wird,
c) wobei die Aufnahmerichtungen und die Beleuchtungsrichtungen einerseits und der Gegenstand andererseits relativ zueinander mit mehreren Freiheitsgraden definiert bewegt werden und
d) wobei die Bildaufnahmen und/oder davon abgeleitete Daten in der Datensammlung gespeichert werden zur Verwendung als Referenzbildaufnahmen bei einem Verfahren zum Greifen des Gegenstands aus einer Mehrzahl von Gegenständen.

2. Verfahren nach Anspruch 1, wobei Bildaufnahmen in verschiedenen Relativlagen von Aufnahmevorrichtungen und Beleuchtungsvorrichtungen einerseits und des Gegenstandes andererseits gemacht werden.

3. Verfahren nach Anspruch 2, wobei Veränderungen der Relativlagen zwischen den Bildaufnahmen festgehalten und den Bildaufnahmen zugeordnet werden und wobei mit den Bildaufnahmen oder mit davon abgeleiteten Daten zugeordnete Lageangaben in der Datensammlung gespeichert werden.

4. Verfahren nach einem der Ansprüche 2 oder 3, wobei die Beleuchtungsvorrichtungen und die Aufnahmevorrichtungen im Wesentlichen sternförmig angeordnet sind, wobei, aus einer Richtung gesehen, die Beleuchtungsrichtungen paarweise einen Winkel zwischen 75 Grad und 145 Grad, vorzugsweise 120 Grad, aufweisen und aus einer Richtung gesehen, die Aufnahmerichtungen paarweise einen Winkel zwischen 75 Grad und 145 Grad, vorzugsweise 120 Grad, aufweisen.

5. Verfahren nach einem der Ansprüche 2 bis 4, wobei die Bildaufnahme aus den Aufnahmerichtungen jeweils im Wesentlichen über Licht aus der im Wesentlichen entgegen gesetzten Beleuchtungsrichtung durchgeführt wird, vorzugsweise durch Schalten und/oder durch Polarisations- und/oder spektrales Filtern und/oder durch Verwendung zumindest einer farbfähigen Aufnahmevorrichtung.

6. Verfahren nach einem der Ansprüche 2 bis 5, wobei mehrere Bildaufnahmen gemacht werden, zwischen denen die Lage von Aufnahmevorrichtungen und Beleuchtungsvorrichtungen gemeinsam verändert wird.

7. Verfahren nach Anspruch 6, wobei die Lage der Aufnahmevorrichtungen und Beleuchtungsvorrichtungen mittels einer Roboterstellung bestimmt wird.

8. Verfahren nach einem der Ansprüche 2 bis 5, wobei mehrere Bildaufnahmen gemacht werden, zwischen denen die Lage des Gegenstandes verändert wird.

9. Verfahren nach Anspruch 8, wobei die Lage des Gegenstandes mittels eines Roboters verändert wird.

10. Verfahren zum Greifen eines Gegenstandes aus einer Mehrzahl von Gegenständen unter Zuhilfenahme von zumindest einer bildgebenden Einrichtung und zumindest einer Beleuchtungsvorrichtung, wobei
a) der Gegenstand aus zumindest drei unterschiedlichen Aufnahmerichtungen aufgenommen wird und
b) aus zumindest drei unterschiedlichen Beleuchtungsrichtungen, jeweils im Auflicht, beleuchtet wird,
wobei jeweils eine Aufnahmerichtung einer Beleuchtungsrichtung im Wesentlichen entgegengesetzt ist,
so dass aus jeder der drei Aufnahmerichtungen jeweils mindestens eine Kontur des Gegenstandes mit einer Lichtseite und einer Schattenseite des Gegenstandes erscheint und im Wesentlichen der gesamte Gegenstand aus den zumindest drei Aufnahmerichtungen durch die zumindest eine bildgebende Einrichtung aufgenommen wird, und
c) wobei die Aufnahmerichtungen und die Beleuchtungsrichtungen einerseits und der Gegenstand andererseits relativ zueinander mit mehreren Freiheitsgraden definiert bewegt werden und
d) wobei Referenzbildaufnahmen aus einer Datensammlung verwendet werden, wobei die Referenzbildaufnahmen des Gegenstands mit einem Verfahren gemäß den Schritten a) bis c) getätigt worden sind.

11. Verfahren nach Anspruch 10, mit einer im Wesentlichen sternförmigen Anordnung der Beleuchtungs- und Aufnahmevorrichtungen,
wobei, aus einer Richtung gesehen, die Beleuchtungsrichtungen paarweise einen Winkel zwischen 75 Grad und 145 Grad, vorzugsweise 120 Grad, aufweisen und aus einer Richtung gesehen, die Aufnahmerichtungen paarweise einen Winkel zwischen 75 Grad und 145 Grad, vorzugsweise 120 Grad, aufweisen.

12. Verfahren nach Anspruch 10 oder 11, wobei die Bildaufnahme aus den Aufnahmerichtungen jeweils im Wesentlichen über Licht aus der im Wesentlichen entgegen gesetzten Beleuchtungsrichtung durchgeführt wird, vorzugsweise durch Schalten und/oder durch Polarisations- und/oder spektrales Filtern und/oder durch Verwendung zumindest einer farbfähigen Aufnahmevorrichtung.

13. Computer-lesbares Speichermedium, welches einen Programmcode umfasst, der das Verfahren nach einem der Ansprüche 10 bis 12 ausführt, wenn er in einen Computer geladen wird.

14. Vorrichtung zum Greifen eines Gegenstands aus einer Mehrzahl von Gegenständen, aufweisend
a) zumindest drei Aufnahmevorrichtungen und
b) zumindest drei Auflicht-Beleuchtungsvorrichtungen, wobei jeweils eine Aufnahmevorrichtung und eine Beleuchtungsvornchtung einander im Wesentlichen gegenüber liegen,
so dass von jeder der drei Aufnahmevorrichtungen jeweils mindestens eine Kontur des Gegenstandes mit einer Lichtseite und einer Schattenseite des Gegenstandes abbildbar ist, und im Wesentlichen der gesamte Gegenstand von den zumindest drei Aufnahmevorrichtungen zusammen genommen abbildbar ist,
c) wobei die Aufnahmerichtungen und die Beleuchtungsrichtungen einerseits und der Gegenstand andererseits relativ zueinander mit mehreren Freiheitsgraden definiert beweglich sind und
d) unter Verwendung von Referenzbildaufnahmen aus einer Datensammlung, wobei die Referenzbildaufnahmen mit Aufnahmevorrichtungen und Beleuchtungsvorrichtungen getätigt sind, die gemäß den Merkmalen a) bis c) ausgestaltet sind.

15. Vorrichtung nach Anspruch 14, die ausgestaltet ist zur Verwendung von Referenzbildaufnahmen und/oder davon abgeleiteten Daten, die in einer Datensammlung enthalten sind, die nach einem der Ansprüche 1 bis 9 aufgebaut ist

16. Vorrichtung nach Anspruch 14 oder 15, weiter aufweisend eine im Wesentlichen sternförmige Anordnung der Beleuchtungsvorrichtungen und Aufnahmevorrichtungen, wobei, aus einer Richtung gesehen, die Beleuchtungsrichtungen paarweise einen Winkel zwischen 75 Grad und 145 Grad, vorzugsweise 120 Grad, aufweisen und aus einer Richtung gesehen, die Aufnahmerichtungen paarweise einen Winkel aufweisen zwischen 75 Grad und 145 Grad, vorzugsweise 120 Grad, aufweisen.

17. Vorrichtung nach einem der Ansprüche 14 bis 16, die ausgestaltet ist zur Aufnahme von Bildern jeweils im Wesentlichen über Licht aus der im Wesentlichen entgegen gesetzten Beleuchtungsrichtung, vorzugsweise durch ein Schaltmittel und/oder durch Polarisations- und/oder Spektral-Filter und/oder durch zumindest eine farbfähigen Aufnahmevorrichtung.

## Revendications

1. Méthode pour établir une collection de données à l'aide d'au moins un dispositif d'acquisition d'images et d'au moins un dispositif d'illumination, dans la quelle
a) un objet est acquis à partir d'au moins trois directions d'acquisition d'images différentes et
b) est illuminé à partir d'au moins trois directions d'illumination différentes, à chaque fois en lumière réfléchie;
une direction d'acquisition d'images respective étant essentiellement opposée à une direction d'illumination,
de sorte que à partir de chaque une des trois directions d'acquisition d'images au moins un contour de l'objet est visible avec une face illuminée et une face ombreuse de l'objet, et essentiellement tout l'objet est acquis par l'au moins un dispositif d'acquisition d'images,
c) les directions d'acquisition d'images et les directions d'illumination d'une part et l'objet d'autre part étant mouvées relativement d'une manière définie à plusieurs degrés de liberté et
d) les images et/ou des données en dérivées étant enregistrées dans la collection des données pour l'usage comme images référentielles dans une méthode pour agripper l'objet parmi une pluralité d'objets.

2. La méthode selon la revendication 1, dans la quelle des images sont acquises sous différentes positions relatives des dispositifs d'acquisition d'images et des dispositifs d'illumination d'une part, et de l'objet de l'autre part.

3. La méthode selon la revendication 2, dans la quelle des modifications des positions relatives entre les images sont enregistrées et associées avec les images, et avec les images ou des données en dérivées, des données associées sont enregistrées dans la collection des données.

4. La méthode selon l'une quelconque des revendications 2 ou 3, dans la quelle les dispositifs d'illumination et les dispositifs d'acquisition d'images sont orientés essentiellement en étoile, des pairs des dispositifs d'illumination formant, vus d'une direction, un angle compris entre 75 degrés et 145 degrés, préférablement de 120 degrés, et des pairs des dispositifs d'acquisition d'images formant, vus d'une direction, un angle compris entre 75 degrés et 145 degrés, préférablement de 120 degrés.

5. La méthode selon l'une quelconque des revendications 2 à 4, dans la quelle l'acquisition d'image à partir des directions d'acquisition d'images est fait essentiellement dans la lumière de la direction d'illumination essentiellement opposée, préférablement par commuter et/ou filtrage polarisant et/ou spectral et/ou usage d'au moins un dispositif d'acquisition d'images couleurs.

6. La méthode selon l'une quelconque des revendications 2 à 5, dans la quelle plusieurs images sont acquises en modifiant la position des dispositifs d'acquisition d'images et des dispositifs d'illumination conjointement.

7. La méthode selon la revendication 6, dans la quelle la position des dispositifs d'acquisition d'images et des dispositifs d'illumination est déterminée a aide d'un geste de robot.

8. La méthode selon l'une quelconque des revendications 2 à 5, dans la quelle plusieurs images sont acquises en modifiant la position de l'objet.

9. La méthode selon la revendication 8, dans la quelle la position de l'objet est modifiée a'aide d'un robot.

10. Méthode pour agripper un objet parmi une pluralité d'objets à l'aide d'au moins un dispositif d'acquisition d'images et d'au moins un dispositif d'illumination, dans la quelle
a) l'objet est acquis à partir d'au moins trois directions d'acquisition d'images différentes et
b) est illuminé à partir d'au moins trois directions d'illumination différentes, à chaque fois en lumière réfléchie;
une direction d'acquisition d'images respective étant essentiellement opposée à une direction d'illumination,
de sorte que à partir de chaque une des trois directions d'acquisition d'images au moins un contour de l'objet est visible avec une face illuminée et une face ombreuse de l'objet, et essentiellement tout l'objet est acquis par l'au moins un dispositif d'acquisition d'images,
c) les directions d'acquisition d'images et les directions d'illumination d'une part et l'objet d'autre part étant mouvées relativement d'une manière définie à plusieurs degrés de liberté et
d) en utilisant des images référentielles d'une collection de données, les images référentielles de l'objet étant faites par une méthode selon les étapes a) à c).

11. La méthode selon la revendication 10, avec une orientation des dispositifs d'illumination et des dispositifs d'acquisition d'images essentiellement en étoile, dans la quelle des pairs des dispositifs d'illumination formant, vu d'une direction, un angle compris entre 75 degrés et 145 degrés, préférablement de 120 degrés, et des pairs des dispositifs d'acquisition d'images formant, vus d'une direction, un angle compris entre 75 degrés et 145 degrés, préférablement de 120 degrés.

12. La méthode selon l'une quelconque des revendications 10 ou 11, dans la quelle l'acquisition d'image à partir des directions d'acquisition d'images est fait essentiellement dans la lumière de la direction d'illumination essentiellement opposée, préférablement par commuter et/ou filtrage polarisant et/ou spectral et/ou usage d'au moins un dispositif d'acquisition d'images couleurs.

13. Support d'enregistrement lisible par ordinateur, comprenant de code de programme qui exécute la méthode selon l'une quelconque des revendications 10 à 12 s'il est chargé dans un ordinateur.

14. Dispositif pour agripper un objet parmi une pluralité d'objets, comprenant
a) au moins trois dispositifs d'acquisition d'images et
b) au moins trois dispositifs d'illumination en lumière réfléchie, une dispositif d'acquisition d'images respective étant essentiellement opposée à une direction d'illumination,
de sorte que à partir de chaque une des trois directions d'acquisition d'images au moins un contour de l'objet peut être formé avec une face illuminée et une face ombreuse de l'objet, et essentiellement tout l'objet peut être formé par l'ensemble des au moins trois dispositifs d'acquisition d'images,
c) les directions d'acquisition d'images et les directions d'illumination d'une part et l'objet d'autre part étant mouvées relativement d'une manière définie à plusieurs degrés de liberté et
d) en utilisant des images référentielles d'une collection de données, les images référentielles étant acquises à l'aide des dispositifs d'acquisition d'images et des dispositifs d'illumination qui sont arrangés selon les caractéristiques a) à c).

15. Le dispositif selon la revendication 14, qui est arrangé pour l'usage d'images référentielles et/ou des données en dérivées qui sont comprises dans une collection des données qui est établie selon l'une quelconque des revendications 1 à 9.

16. Le dispositif selon l'une quelconque des revendications 15 ou 16, comprenant en plus une orientation essentiellement en étoile des dispositifs d'illumination et des dispositifs d'acquisition d'images, des pairs des dispositifs d'illumination formant, vu d'une direction, un angle compris entre 75 degrés et 145 degrés, préférablement de 120 degrés, et des pairs des dispositifs d'acquisition d'images formant, vus d'une direction, un angle compris entre 75 degrés et 145 degrés, préférablement de 120 degrés.

17. Le dispositif selon l'une quelconque des revendications 14 à 16, étant adapté pour l'acquisition d'images essentiellement dans la lumière de la direction d'illumination essentiellement opposée, préférablement par un moyen de commutation et/ou par des moyens de filtrage polarisant et/ou spectral et/ou usage d'au moins un dispositif d'acquisition images couleurs.

## Claims

1. A method for establishing a data collection with the aid of at least one imaging device and at least one illumination device, wherein
a) an object is imaged from at least three different imaging directions and
b) is illuminated from at least three different illumination directions, each time in reflected light,
wherein a respective imaging direction is substantially opposite to respective illuminating direction,
such that from each of the three imaging directions at least one contour of the object is visible with an illuminated side and a shaded side of the object and substantially the whole object is imaged from the at least three imaging directions by the at least one imaging device,
c) wherein the imaging directions and the illumination directions on the one hand and the object on the other hand are moved in a defined manner relatively to each other at several degrees of freedom, and
d) wherein the images and/or data derived therefrom are stored in the data collection for use as reference images in a method for gripping the object out of a plurality of objects.

2. The method according to claim 1, wherein images are made in different relative positions of imaging devices and illuminating devices on the one hand, and of the object on the other hand.

3. The method according to claim 2, wherein changes of the relative positions of the images are recorded and associated with the images, and wherein position data associated with the images or with data derived therefrom are stored in the data collection.

4. The method according to one of claims 2 or 3, wherein the illuminating devices and the imaging devices are arranged substantially in a star-like manner whereby, if seen from a direction, pairs of the illumination devices form an angle between 75 degrees and 145 degrees, preferably 120 degrees, and if seen from a direction, pairs of the imaging devices form an angle between 75 degrees and 145 degrees, preferably 120 degrees.

5. The method according to one of claims 2 to 4, wherein the imaging from the imaging directions is performed substantially with light from the substantially opposite illumination direction, preferably by switching and/or by polarization and/or spectral filtering and/or by using of at least one color imaging device.

6. The method according to one of claims 2 to 5, wherein several images are taken, whereby the positions of imaging devices and illumination devices are changed together.

7. The method according to claim 6, wherein the position of the imaging devices and illumination devices is determined by a manipulator position.

8. The method according to one of claims 2 to 5, wherein several images are taken, whereby the position of the object is changed between them.

9. The method according to claim 8, wherein the position of the object is changed by a manipulator.

10. A method for gripping an object out of a plurality of objects by use of at least one imaging device and at least one illumination device, wherein
a) the object is imaged from at least three different imaging directions and
b) is illuminated from at least three different illumination directions, each time in reflected light,
whereby a respective imaging direction is substantially opposite to a respective illumination direction,
such that from each of the three imaging directions at least one contour of the object is visible with an illuminated side and a shaded side of the object and substantially the whole object is imaged from the at least three imaging directions by the at least one imaging device, and
c) whereby the imaging directions and the illumination directions on the one hand and the object on the other hand are moved in a defined manner relatively to each other at several degrees of freedom, and
d) wherein reference images from a data collection are used, whereby the reference images of the object are taken with a method according to steps a) to c).

11. The method according to claim 10, with a substantially star-like arrangement of the illumination and imaging devices,
whereby if seen from a direction, pairs of the illuminating devices form an angle between 75 degrees and 145 degrees, preferably 120 degrees, and if seen from a direction, pairs of the imaging directions form an angle between 75 degrees and 145 degrees, preferably 120 degrees.

12. The method according to claim 10 or 11, wherein the imaging from the imaging directions is respectively performed substantially with light from the substantially opposite illumination direction, preferably by switching and/or polarization and/or spectral filtering and/or by using of at least a color imaging device.

13. Computer readable storage medium comprising program code which executes the method according to one of claims 10 to 12 if loaded into a computer.

14. Apparatus for gripping an object out of a plurality of objects, comprising
a) at least three imaging devices and
b) at least three reflected light-illumination devices, whereby a respective
imaging device and an illumination device are substantially opposite to each other,
such that from each of the three imaging devices, at least one contour of the object can be imaged with an illuminated side and an shaded side of the object, and substantially the whole object can be imaged by the at least three imaging devices taken together,
c) wherein the imaging directions and the illumination directions on the one hand and the object on the other hand can be moved in a defined manner relatively to each other at several degrees of freedom, and
d) by use of reference images from a data collection, whereby the reference images are made with imaging devices and illuminating devices which are arranged according to the features a) to c).

15. The apparatus according to claim 14, which is arranged for use of reference images and/or data derived therefrom which are comprised in a data collection which is established according to one of claims 1 to 9.

16. The apparatus according to claim 14 or 15, further comprising a substantially star-like arrangement of the illumination devices and imaging devices whereby if seen from a direction, pairs of the illumination directions form an angle between 75 degrees and 145 degrees, preferably 120 degrees and, if seen from a direction, pairs of the imaging directions form an angle between 75 degrees and 145 degrees, preferably 120 degrees.

17. The apparatus according to one of claims 14 to 16, which is arranged for taking images substantially through light from the substantially opposite illumination direction, preferably by switching means and/or polarization and/or spectral filter and/or by at least a color imaging device.
